# EUROPÄISCHE PATENTANMELDUNG

(11) **EP 2 805 981 A1**
(43) Veröffentlichungstag der Anmeldung: **26.11.2014**
(21) Anmeldenummer: 13169194.1
(22) Anmeldetag: 24.05.2013
(51) Int. Cl.: C08G 59/02, C08G 59/22, C08L 63/00

(54) **Polybutadien mit Epoxygruppen**

(71) Anmelder: Evonik Industries AG, 45128 Essen (DE)
(72) Erfinder: Haberkorn, Niko, 46282 Dorsten (DE); Berlineanu, Andreas, 45772 Marl (DE); Denkinger, Peter, 48301 Nottuln (DE); Beierlein, Christine, 44795 Bochum (DE)

(57) **Zusammenfassung**

Die vorliegende Erfindung betrifft die Verwendung eines Polybutadiens mit Epoxygruppen zur Erhöhung der Schlagzähigkeit einer härtbaren Zusammensetzung umfassend wenigstens ein Epoxidharz und wenigstens einen Härter im ausgehärteten Zustand,
wobei das Polybutadien die aus 1,3-Butadien abgeleiteten Monomereinheiten 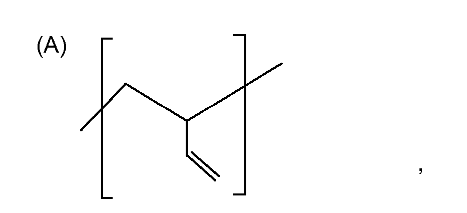 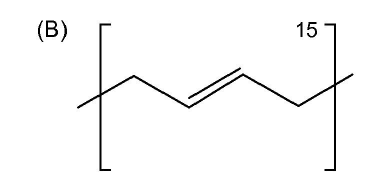 und 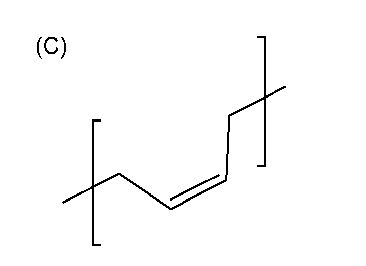 umfasst,
wobei der Anteil von A an der Gesamtheit der im Polybutadien enthaltenen aus 1,3-Butadien abgeleiteten Monomereinheiten 10 bis 60 Molprozent beträgt,
und wobei die Summe der Anteile von B und C an der Gesamtheit der im Polybutadien enthaltenen aus 1,3-Butadien abgeleiteten Monomereinheiten 40 bis 90 Molprozent beträgt.

## Beschreibung

Die vorliegende Erfindung betrifft die Verwendung eines Polybutadiens mit Epoxygruppen zur Erhöhung der Schlagzähigkeit einer härtbaren Zusammensetzung umfassend wenigstens ein Epoxidharz und wenigstens einen Härter im ausgehärteten Zustand,
wobei das Polybutadien die aus 1,3-Butadien abgeleiteten Monomereinheiten 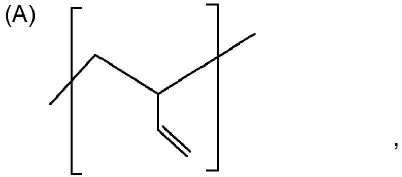 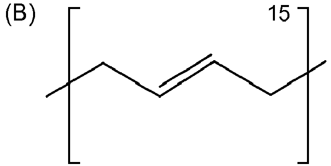 und 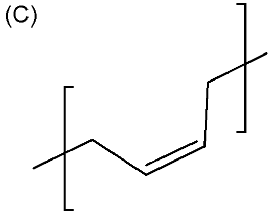 umfasst,
wobei der Anteil von A an der Gesamtheit der im Polybutadien enthaltenen aus 1,3-Butadien abgeleiteten Monomereinheiten 10 bis 60 Molprozent beträgt,
und wobei die Summe der Anteile von B und C an der Gesamtheit der im Polybutadien enthaltenen aus 1,3-Butadien abgeleiteten Monomereinheiten 40 bis 90 Molprozent beträgt.

Polybutadiene stellen eine Klasse industriell hoch relevanter organischer Verbindungen dar, die durch Polymerisation von aus dem Cracken von Erdöl in großen Mengen erhältlichem 1,3-Butadien hergestellt werden. Sie sind interessante und wichtige Ausgangsstoffe für chemische Synthesen gleichermaßen im Labor- und Großmaßstab.

Die Polymerisation von 1,3-Butadien zu Polybutadien ist über im Stand der Technik beschriebene Verfahren, die eine anionische Polymerisation umfassen, leicht zu bewerkstelligen. Für viele Anwendungen können die entstehenden Polybutadiene jedoch nicht direkt verwendet werden, sondern sie müssen zunächst einer Modifizierung unterzogen werden.

Als eine solche Modifizierung bietet sich insbesondere die Epoxidierung mittels Reagenzien wie Epichlorhydrin an. Epoxidgruppen können für vielfältige weitere Reaktionen, insbesondere mit Anhydriden oder Aminen, genutzt werden. Das entstehende Polybutadien mit Epoxygruppen kann somit mit Reagenzien wie Diaminen unter Bildung eines widerstandsfähigen Kunststoffes umgesetzt werden.

Shell Oil Company, Research Disclosure, Vol. 416, 12, 1998, Seite 1594, beschreibt die Darstellung von Butadien-Polymeren mit Epoxygruppen. Die Polydiendiole wurden über anionische Polymerisation erhalten. Man erwähnt die schlechte Verträglichkeit der Produkte und deren niedrige Funktionalität von 1,1 bzw. 1,6 und 2. Zur Verbesserung der Verträglichkeit wird die Umsetzung der Glycidether mit EPICURE 3140 Polyamid beschrieben.

Die Erfindung SU195104 (Kautschukinstitut Lebedev) beschreibt die Synthese eines anionischen Polybutadienpolymerisates zu einem "lebendem Polymer" mit Metallatomen der I-III-Gruppe und deren Behandlung mit Epichlorhydrin, Säuren und Basen. Das "lebende Polymer" wird vor der Umsetzung mit Epichlorhydrin nicht isoliert und von Butadienoligomeren befreit. Die Produkte werden mit Maleinsäureanhydrid und Phthalsäureanhydrid umgesetzt.

Die im Stand der Technik beschriebenen Verfahren zur Herstellung von Polybutadien mit Epoxygruppen weisen jedoch den Nachteil auf, dass das Polybutadien schwer zu verarbeiten ist, das es hohe Viskositäten und hohe Glasübergangstemperaturen aufweist. Weiterhin weisen die Produkte im Stand der Technik beschriebenen Verfahren zur Herstellung von Polybutadien mit Epoxygruppen eine schlechte Verträglichkeit mit anderen Komponenten von Beschichtungsmitteln auf, insbesondere Epoxidharzen.

Ein weiteres Problem von im Stand der Technik beschriebenen härtbaren Zusammensetzungen umfassend ein Expoxidharz und einen Härter, bevorzugt einen aminhaltigen Härter, betrifft die Materialeigenschaften der im ausgehärteten Zustand häufig mechanisch stark beanspruchten Zusammensetzung, insbesondere die in vielen Fällen unzureichende Schlagzähigkeit der ausgehärteten Zusammensetzungen.

Vor diesem Hintergrund besteht die der Erfindung zu Grunde liegende Aufgabe darin, ein Polybutadien mit Epoxygruppen und ein Verfahren zur dessen Herstellung bereitzustellen, das zur Verarbeitung günstigere Eigenschaften aufweist, insbesondere eine möglichst geringe Viskosität und/oder Glasübergangstemperatur.

Eine weitere der Erfindung zu Grunde liegende Aufgabe besteht darin, ein Polybutadien mit Epoxygruppen bereitzustellen, das eine möglichst gute Verträglichkeit mit anderen Komponenten von Beschichtungsmitteln, insbesondere Epoxidharzen aufweist.

Eine weitere der Erfindung zu Grunde liegende Aufgabe besteht darin, einen Weg zur Erhöhung der Schlagzähigkeit einer härtbaren Zusammensetzung im ausgehärteten Zustand bereitzustellen.

Diese und weitere Aufgaben werden durch den Gegenstand der vorliegenden Anmeldung und insbesondere auch durch den Gegenstand der beigefügten unabhängigen Ansprüche gelöst, wobei sich Ausführungsformen aus den Unteransprüchen ergeben.

Das der vorliegenden Erfindung zu Grunde liegende Problem wird in einem ersten Aspekt gelöst durch eine Verwendung von Polybutadien mit Epoxygruppen zur Erhöhung der Schlagzähigkeit einer härtbaren Zusammensetzung umfassend wenigstens ein Epoxidharz und wenigstens einen Härter im ausgehärteten Zustand,
wobei das Polybutadien die aus 1,3-Butadien abgeleiteten Monomereinheiten 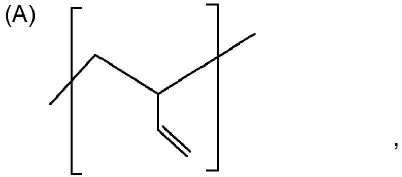 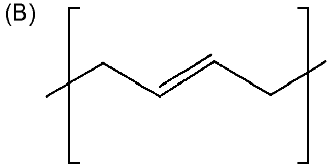 und 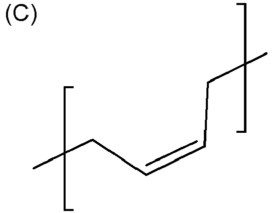 umfasst,
wobei der Anteil von A an der Gesamtheit der im Polybutadien enthaltenen aus 1,3-Butadien abgeleiteten Monomereinheiten 10 bis 60 Molprozent beträgt,
und wobei die Summe der Anteile von B und C an der Gesamtheit der im Polybutadien enthaltenen aus 1,3-Butadien abgeleiteten Monomereinheiten 40 bis 90 Molprozent beträgt.

Das Problem wird in einer bevorzugten Ausführungsform des ersten Aspekts durch eine Verwendung gelöst, wobei der Anteil von A, B und C an der Gesamtheit der im Polybutadien enthaltenen aus 1,3-Butadien abgeleiteten Monomereinheiten jeweils und unabhängig voneinander wenigstens 10 % beträgt.

Das Problem wird in einer bevorzugten Ausführungsform des ersten Aspekts durch eine Verwendung gelöst, wobei der Anteil von A an der Gesamtheit der im Polybutadien enthaltenen aus 1,3-Butadien abgeleiteten Monomereinheiten 15 bis 30, der Anteil von B an der Gesamtheit der im Polybutadien enthaltenen aus 1,3-Butadien abgeleiteten Monomereinheiten 50 bis 70 und der Anteil von C an der Gesamtheit der im Polybutadien enthaltenen aus 1,3-Butadien abgeleiteten Monomereinheiten 15 bis 30 Molprozent beträgt.

Das Problem wird in einer bevorzugten Ausführungsform des ersten Aspekts durch eine Verwendung gelöst, wobei die Epoxygruppen die Formel (I) 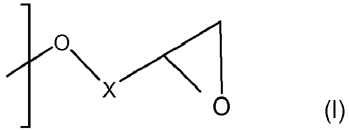 aufweisen und X eine lineare oder verzweigte Alkylengruppe darstellt, bevorzugt eine lineare Alkylengruppe der Formel -(CH₂)ₓ-, wobei x 1 bis 4, noch bevorzugter 1 ist.

Das Problem wird in einer weiteren bevorzugten Ausführungsform des ersten Aspekts durch eine Verwendung gelöst, wobei das Polybutadien 1,5 bis 3, bevorzugt 1,75 bis 2,5 Epoxygruppen aufweist.

Das Problem wird in einer weiteren bevorzugten Ausführungsform des ersten Aspekts durch eine Verwendung gelöst, wobei es sich bei der härtbaren Zusammensetzung um eine härtbare Zusammensetzung in Kleb-, Dicht- und Akustikmassen für Automobilanwendungen, Gießharzformulierungen für Elektroisolation, Dichtmassen für Baustoffe, zur Imprägnierung oder Verklebung von Metall, Glas- und Kohlefasergewebe handelt.

Das Problem wird in einer weiteren bevorzugten Ausführungsform des ersten Aspekts durch eine Verwendung gelöst, wobei das Epoxidharz aus der Gruppe umfassend Epoxidharze auf der Basis von Bisphenol A-diglycidylether, Bisphenol F-diglycidylether, kettenverlängerte Bisphenol-A-Harze mit Molmassen von 700 bis 5000, epoxidierte Novolake, Triglycidyl-p-aminophenol, Tetraglycidyl-methylendianilin und Hexahydrophthalsäure-diglycidylester und cycloaliphatische Typen ausgewählt ist.

Das Problem wird in einer weiteren bevorzugten Ausführungsform des ersten Aspekts durch eine Verwendung gelöst, wobei es sich bei dem wenigstens einen Härter handelt, der aus der Gruppe ausgewählt ist, die aminhaltigen Härter mit mindestens zwei oder mehr primäre und/oder sekundäre Aminogruppen, Di- und Polycarbonsäureanhydride umfasst.

Das Problem wird in einer weiteren bevorzugten Ausführungsform des ersten Aspekts durch eine Verwendung gelöst, wobei es sich bei dem Härter aus der Gruppe ausgewählt ist, die substituierte Harnstoffe, Guanamine, Guanidine und Imidazole umfasst.

Das Problem wird in einer weiteren bevorzugten Ausführungsform des ersten Aspekts durch eine Verwendung gelöst, wobei es sich bei dem Härter um Dicyandiamid handelt.

Das Problem wird in einer weiteren bevorzugten Ausführungsform des ersten Aspekts durch eine Verwendung gelöst, wobei es sich bei dem wenigstens einen Härter um ein Polyamin handelt.

Das Problem wird in einer weiteren bevorzugten Ausführungsform des ersten Aspekts durch eine Verwendung gelöst, wobei die härtbare Zusammensetzung wenigstens eine weitere Verbindung aus der Gruppe umfassend Lösungsmittel, Reaktionsbeschleuniger, Pigmente, Füllstoffe, Additive, Reaktivverdünner und Modifizierungsmittel umfasst.

Das der Aufgabe zu Grunde liegende Problem wird in einem zweiten Aspekt gelöst durch ein Polybutadien mit Epoxygruppen, wobei das Polybutadien die aus 1,3-Butadien abgeleiteten Monomereinheiten 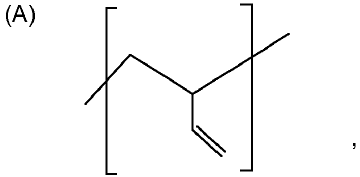 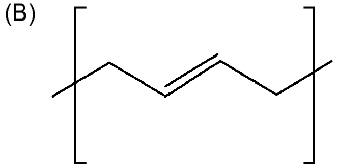 und 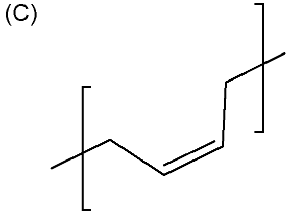 umfasst,
wobei der Anteil von A an der im Polybutadien enthaltenen aus 1,3-Butadien abgeleiteten Gesamtheit der Monomereinheiten 10 bis 60 Molprozent beträgt,
und wobei die Summe der Anteile von B und C an der Gesamtheit der im Polybutadien enthaltenen aus 1,3-Butadien abgeleiteten Monomereinheiten 40 bis 90 Molprozent beträgt.

In einer ersten Ausführungsform des zweiten Aspekts wird das Problem gelöst durch ein Polybutadien mit Epoxygruppen, wobei der Anteil von A, B und C an der Gesamtheit der im Polybutadien enthaltenen aus 1,3-Butadien abgeleiteten Monomereinheiten jeweils und unabhängig voneinander wenigstens 10 % beträgt.

In einer zweiten Ausführungsform des zweiten Aspekts, bei der es sich auch um eine Ausführungsform der ersten Ausführungsform handelt, wird das Problem gelöst durch ein Polybutadien mit Epoxygruppen, wobei der Anteil von A an der Gesamtheit der im Polybutadien enthaltenen aus 1,3-Butadien abgeleiteten Monomereinheiten 15 bis 30, der Anteil von B an der Gesamtheit der im Polybutadien enthaltenen aus 1,3-Butadien abgeleiteten Monomereinheiten 50 bis 70 und der Anteil von C an der Gesamtheit der im Polybutadien enthaltenen aus 1,3-Butadien abgeleiteten Monomereinheiten 15 bis 30 Molprozent beträgt.

In einer dritten Ausführungsform des zweiten Aspekts, bei der es sich auch um eine Ausführungsform der ersten bis zweiten Ausführungsform handelt, wird das Problem gelöst durch ein Polybutadien mit Epoxygruppen, wobei die Epoxygruppen die Formel (I) 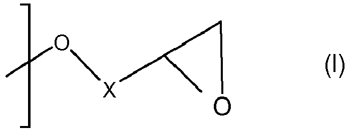 aufweisen und X eine lineare oder verzweigte Alkylengruppe darstellt, bevorzugt eine lineare Alkylengruppe der Formel -(CH₂)ₓ-, wobei x 1 bis 4, noch bevorzugter 1 ist.

In einer vierten Ausführungsform des zweiten Aspekts, bei der es sich auch um eine Ausführungsform der ersten bis dritten Ausführungsform handelt, wird das Problem gelöst durch ein Polybutadien mit Epoxygruppen, wobei das Polybutadien 1,5 bis 3, bevorzugt 1,75 bis 2,5 Epoxygruppen aufweist.

In einem dritten Aspekt wird das der Erfindung zu Grunde liegende Problem gelöst durch ein Verfahren zur Herstellung eines Polybutadiens mit Epoxygruppen, umfassend die Schritte
a) Bereitstellen eines mittels radikalischer Polymerisation hergestellten Polybutadiens mit Hydroxygruppen,
b) Umsetzen des Polybutadiens mit Hydroxygruppen aus Schritt a) mit einer Monoepoxyverbindung in einer Reaktionsmischung,
   wobei das Molverhältnis zwischen endständigen Hydroxygruppen und der Monoepoxyverbindung 10:1 bis 1:10 beträgt,
   wobei die Temperatur 0 bis 150 °C beträgt,
   und wobei die Reaktionszeit 0,5 bis 24 Stunden beträgt.
c) Zugeben eines Alkalimetallhydroxids, Alkalimetallhydrogencarbonats oder Alkalimetallcarbonats zur Reaktionsmischung aus Schritt b),
   wobei das Polybutadien mit endständigen Hydroxygruppen die aus 1,3-Butadien abgeleiteten Monomereinheiten 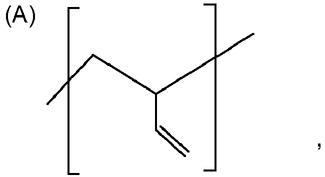 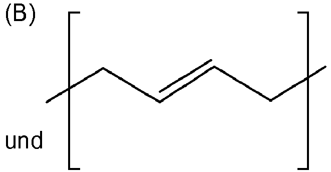 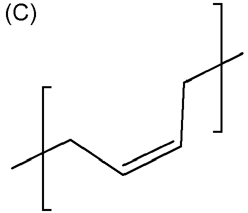
umfasst,
wobei der Anteil von A an der Gesamtheit der im Polybutadien enthaltenen aus 1,3-Butadien abgeleiteten Monomereinheiten 10 bis 60 Molprozent beträgt,
und wobei die Summe der Anteile von B und C an der Gesamtheit der im Polybutadien enthaltenen aus 1,3-Butadien abgeleiteten Monomereinheiten 40 bis 90 Molprozent beträgt
wobei bevorzugt der Anteil von A, B und C an der Gesamtheit der im Polybutadien enthaltenen aus 1,3-Butadien abgeleiteten Monomereinheiten jeweils und unabhängig voneinander wenigstens 10 % beträgt,
wobei noch bevorzugter der Anteil von A an der Gesamtheit der im Polybutadien enthaltenen aus 1,3-Butadien abgeleiteten Monomereinheiten 15 bis 30, der Anteil von B an der Gesamtheit der im Polybutadien enthaltenen aus 1,3-Butadien abgeleiteten Monomereinheiten 50 bis 70 und der Anteil von C an der Gesamtheit der im Polybutadien enthaltenen aus 1,3-Butadien abgeleiteten Monomereinheiten 15 bis 30 Molprozent beträgt.

In einer ersten Ausführungsform des dritten Aspekts wird das Problem gelöst durch ein Verfahren, wobei die Monoepoxyverbindung aus der Gruppe ausgewählt ist, die Epihalohydrine, bevorzugt Epichlorhydrin, β-Methylepichlorhydrin oder Epibromhydrin, und Alkylenoxide, bevorzugt Ethylenoxid, 1,2-Propylenoxid oder 1,2-Butylenoxid, umfasst.

In einer zweiten Ausführungsform des dritten Aspekts, bei der es sich auch um eine Ausführungsform der ersten Ausführungsform handelt, wird das Problem gelöst durch ein Verfahren, wobei das Molverhältnis zwischen der Monoepoxyverbindung und endständigen Hydroxygruppen in der Reaktionsmischung in Schritt b) 0,5 bis 2, bevorzugt 0,9 bis 1,2 beträgt.

In einer dritten Ausführungsform des dritten Aspekts, bei der es sich auch um eine Ausführungsform der ersten bis zweiten Ausführungsform handelt, wird das Problem gelöst durch ein Verfahren, wobei Schritt b) in Anwesenheit eines Lösungsmittels abläuft, wobei das Lösungsmittel bevorzugt aus der Gruppe ausgewählt ist, die bei Raumtemperatur flüssige Aliphaten, Aromaten, Ester und Ether umfasst.

In einer vierten Ausführungsform des dritten Aspekts, bei der es sich auch um eine Ausführungsform der ersten bis dritten Ausführungsform handelt, wird das Problem gelöst durch ein Verfahren, wobei Schritt b) in Anwesenheit wenigstens eines Metall- oder Halbmetallsalzes abläuft, das wenigstens ein Metall- oder Halbmetallkation, bevorzugt ausgewählt aus der Gruppe umfassen Bor, Aluminium, Zink und Zinn und wenigstens ein Anion umfasst, welches aus der Gruppe umfassend F⁻,Cl⁻, BF₄⁻, PF₆⁻, AsF₆⁻, SbF₆⁻, ClO₄⁻, IO₄⁻ und NO₃⁻ ausgewählt ist.

In einer fünften Ausführungsform des zweiten Aspekts, bei der es sich auch um eine Ausführungsform der ersten bis vierten Ausführungsform handelt, wird das Problem gelöst durch ein Verfahren, wobei in Schritt c) 0,7 bis 1,4 Mol Alkalimetallhydroxid, Alkalimetallhydrogencarbonats oder Alkalimetallcarbonats pro Mol endständiger Hydroxygruppen in Schritt a) zugegeben werden.

In einer sechsten Ausführungsform des dritten Aspekts, bei der es sich auch um eine Ausführungsform der ersten bis fünften Ausführungsform handelt, wird das Problem gelöst durch ein Verfahren, weiter umfassend destillatives Entfernen von überschüssiger Monoepoxyverbindung nach Schritt b) und vor Schritt c).

In einer siebten Ausführungsform des dritten Aspekts, bei der es sich um eine Ausführungsform der dritten bis sechsten Ausführungsform handelt, wird das Problem gelöst durch ein Verfahren, wobei Schritt b) in Anwesenheit eines Lösungsmittels durchgeführt und dieses vor, während oder nach Schritt c), bevorzugt nach Schritt c), von der Reaktionsmischung abgetrennt wird.

In einer achten Ausführungsform des dritten Aspekts, bei der es sich um eine Ausführungsform der dritten bis siebten Ausführungsform handelt, wird das Problem gelöst durch ein Verfahren, wobei Schritt b) in Anwesenheit von Inertgas abläuft.

In einem vierten Aspekt wird das der Erfindung zu Grunde liegende Problem gelöst durch eine Zusammensetzung umfassend das Polybutadien mit Epoxygruppen nach dem ersten Aspekt oder einer Ausführungsform des ersten Aspekts oder das nach dem Verfahren nach dem zweiten Aspekt oder einer Ausführungsform des zweiten Aspekts hergestellte Polybutadien mit Epoxygruppen sowie wenigstens einen Härter, optional zusätzlich wenigstens ein Epoxydharz.

In einem fünften Aspekt wird das der Erfindung zu Grunde liegende Problem gelöst durch ein Bindemittel in Kleb-, Dicht- und Akustikmassen für Automobilanwendungen, Gießharzformulierungen für Elektroisolation, Dichtmassen für Baustoffe, zur Imprägnierung oder Verklebung von Glas- und Kohlefasergewebe umfassend das Polybutadien mit endständigen Epoxygruppen nach dem ersten Aspekt oder einer Ausführungsform des ersten Aspekts oder das nach dem Verfahren nach dem zweiten Aspekt oder einer Ausführungsform des zweiten Aspekts hergestellte Polybutadien mit endständigen Epoxygruppen und wenigstens einen Härter, optional zusätzlich wenigstens ein Epoxydharz.

In einem sechsten Aspekt wird das der Erfindung zu Grunde liegende Problem gelöst durch eine Verwendung des Polybutadiens mit endständigen Epoxygruppen nach dem ersten Aspekt oder einer Ausführungsform des ersten Aspekts oder des nach dem Verfahren nach dem zweiten Aspekt oder einer Ausführungsform des zweiten Aspekts hergestellten Polybutadiens mit endständigen Epoxygruppen oder der Zusammensetzung nach dem dritten Aspekt als Bindemittel in Kleb-, Dicht- und Akustikmassen für Automobilanwendungen, in Gießharzformulierungen für Elektroisolation, in Dichtmassen für Baustoffe, zur Imprägnierung oder Verklebung von Glas- und Kohlefasergewebe.

In einem sechsten Aspekt wird das der Erfindung zu Grunde liegende Problem gelöst durch ein Verfahren umfassend den Schritt Aushärten der Zusammensetzung nach dem vierten Aspekt. Die vorliegende Erfindung basiert auf der überraschenden Erkenntnis, dass ausgehend von mittels einer radikalischen Polymerisation erhaltenem Polybutadien hergestelltes Polybutadien mit Epoxygruppen eine geringe Viskosität und Glasübergangstemperatur aufweist. Ohne an eine bestimmte Theorie gebunden sein zu wollen, vermuten die Erfinder der vorliegenden Erfindung, dass die radikalische Polymerisation gegenüber einer anionischen Polymerisation von Butadien zu einem Polybutadien mit einem hohen Gehalt an 1.2-Vinyl als Monomerbaustein am Polymer führt und dass dieses Monomer für die genannten Eigenschaften ursächlich ist.

Die vorliegende Erfindung basiert weiterhin auf der überraschenden Erkenntnis, dass Polybutadien mit endständigen Epoxygruppen als Bestandteil einer härtbaren Mischung mit einem Epoxidharz und einem Härter geeignet ist, die Schlagzähigkeit der Zusammensetzung im ausgehärteten Zustand zu erhöhen.

Die vorliegende Erfindung betrifft die Verwendung eines Polybutadiens mit Epoxygruppen zur Erhöhung der Schlagzähigkeit. Ein solches Polybutadien kann ausgehend von einem durch radikalische Polymerisation von 1,3-Butadien erzeugtes Polybutadien mit Hydroxygruppen und daraus hergestelltes Polybutadien mit Epoxygruppen erhalten werden, jeweils umfassend die im Polybutadien enthaltenen aus 1,3-Butadien abgeleiteten Monomereinheiten A), B) und C), wobei eine eckige Klammer bei der in dieser Anmeldung gewählten formelmäßigen Darstellung der im Polybutadien enthaltenen aus 1,3-Butadien abgeleiteten Monomereinheiten A), B) und C) zeigt, dass die mit der jeweiligen eckigen Klammer versehene Bindung nicht etwa mit einer Methylgruppe endet, sondern dass die entsprechende Monomereinheit über diese Bindung mit einer weiteren Monomereinheit oder einer anderen funktionellen Gruppe, insbesondere einer Hydroxygruppe oder Epoxygruppe, verbunden ist. Die Monomereinheiten A), B) und C) können dabei in beliebiger Reihenfolge im Polymer angeordnet sein. Bevorzugt ist eine statistische Anordnung.

Die Charakterisierung der mechanischen Eigenschaften der härtbaren Zusammensetzung im ausgehärteten Zustand erfolgt bevorzugt durch Bestimmung der Zugfestigkeit und Schlagzähigkeit (Charpy) eines Prüfkörpers nach den Prüfnormen DIN 53455 bzw, DIN 53453. In einer bevorzugten Ausführungsform können neben den im Polybutadien enthaltenen aus 1,3-Butadien abgeleiteten Monomereinheiten A), B) und C) auch noch andere Monomereinheiten enthalten sein, insbesondere solche, die nicht aus 1,3-Butadien abgeleitet sind. In einer bevorzugtesten Ausführungsform stellt die Gesamtheit der im Polybutadien enthaltenen aus 1,3-Butadien abgeleiteten Monomereinheiten A), B) und C) jedoch einen Anteil an der Gesamtheit der in dem Polymer eingebauten Monomereinheiten, umfassend die aus 1,3-Butadien abgeleiteten und andere, von wenigstens 80, bevorzugt 90, noch bevorzugter 95, am bevorzugtesten 100 Molprozent dar.

Das erfindungsgemäße oder nach dem erfindungsgemäßen Verfahren hergestellte Polybutadien mit Epoxygruppen ist nahezu farblos und weist eine niedrige Viskosität auf. Die Viskosität wird bevorzugt bei 20 °C mit dem Rotationsviskosimeter der Firma Haake ermittelt.

Das erfindungsgemäße oder nach dem erfindungsgemäßen Verfahren hergestellte Polybutadien mit Epoxygruppen weist in einer bevorzugten Ausführungsform eine mittlere Funktionalität von 1,5 bis 3, bevorzugt 1,75 bis 2,5 auf. Dies bedeutet in einer noch bevorzugten Ausführungsform, dass ein Polybutadienmolekül unabhängig von seiner Länge durchschnittlich 1,5 bis 3, bevorzugt 1,75 bis 2,5 Epoxygruppen aufweist.

Bevorzugt erfolgt die Bereitstellung des erfindungsgemäß verwendeten Polybutadiens durch ein Verfahren umfassend als Schritt a) das Bereitstellen eines mittels radikalischer Polymerisation hergestellten Polybutadiens mit Hydroxygruppen. Ein derartiges Polybutadien mit Hydroxygruppen kann beispielsweise durch Polymerisation von 1,3-Butadien in Anwesenheit von Wasserstoffperoxid, Wasser und einem organischen Lösungsmittel hergestellt werden, wie es in der EP12169794.0 beschrieben ist. In einer bevorzugten Ausführungsform wird unter dem Begriff "Polybutadien", wie hierin verwendet, ein durch Polymerisation von Monomereinheiten mit jeweils wenigstens zwei konjugierten Doppelbindungen verstanden, wobei es sich in Reihenfolge zunehmender Bevorzugung bei wenigstens 80, 85, 90, 95, 98, 99 oder 99,9 % der Monomereinheiten um 1,3-Butadien handelt.

In Schritt b) des Verfahrens wird das Polybutadien mit Hydroxygruppen mit einer Monoepoxyverbindung in Anwesenheit von Inertgas umgesetzt. Als Monoepoxyverbindung eignet sich besonders ein Epihalohydrin, bevorzugt aus der Gruppe ausgewählt, die Epichlorhydrin, Beta-Methylepichlorhydrin oder Epibromhydrin umfasst, sowie einem Alkylenoxid, bevorzugt aus der Gruppe ausgewählt, die Ethylenoxid, 1,2-Propylenoxid und 1,2-Butylenoxid umfasst. Bevorzugt wird Epichlorhydrin in einer Menge von 0,5 und 2 Mol Epichlorhydrin pro Äquivalent an einem Polybutadien gebundener Hydroxygruppe eingesetzt. Besonders bevorzugt wird 0,9 bis 1,2 Mol Epichlorhydrin pro Äquivalent an einem Polybutadien gebundener Hydroxygruppe eingesetzt.

In einer bevorzugten Ausführungsform läuft Schritt b) in einem Lösungsmittel ab. In einer bevorzugten Ausführungsform handelt es sich bei dem Lösungsmittel um einen bei der Raumtemperatur flüssigen Aliphaten, beispielsweise Hexan, Heptan, Octan, Cyclohexan, um einen bei der Raumtemperatur (25 °C) flüssigen Aromaten, beispielsweise Benzol, Toluol, um einen bei der Raumtemperatur flüssigen Ester, beispielsweise Ethylacetat, Butylacetat, oder um einen bei der Raumtemperatur flüssigen Ether, beispielsweise Diethyl- und Disiopropylether, Dioxan und Tetrahydrofuran. Art und Menge des Lösungsmittels ist abhängig vom eingesetzten Polybutadien mit Hydroxygruppen und der Menge der der Monoepoxyverbindung. Lösungsmittelgemische der genannten Lösungsmittel sind in beliebigen Mengenverhältnissen möglich. Der Anteil der Summe von Polybutadien mit Hydroxygruppen und Monoepoxyverbindung im Reaktionsgemisch kann jeweils zwischen 5 und 80 Gewichtsprozent betragen.

Die Reaktion wird in Anwesenheit eines Inertgases bei reduziertem oder erhöhtem Druck durchgeführt. In einer bevorzugten Ausführungsform bedeutet der Begriff "Inertgas", wie hierin verwendet, ein Gas oder Gasgemisch, das in seiner Gesamtheit reaktionsträge ist. Bevorzugt handelt es sich bei dem Inertgas um Stickstoff, Edelgase oder Mischungen davon.

Bevorzugt dauert Schritt b) 0,5 bis 24 Stunden an.

Die Temperatur in Schritt b) beträgt 0 bis 150, bevorzugt 0 bis 70 °C.

Beim Starten der Reaktion in Schritt b) kann sowohl das Polybutadien mit Hydroxygruppen als auch das Monoepoxyverbindung vorgelegt werden. Alternativ können auch beide Verbindungen gemeinsam vorgelegt werden. Danach wird das Reaktionsgemisch durch Aufheizen auf die Reaktionstemperatur gebracht.

Schritt b) läuft bevorzugt in Anwesenheit eines Metall- oder Halbmetallsalzes als Katalysator ab. Dabei handelt es sich um wenigstens ein Metall der Haupt- oder Nebengruppen des Periodensystems , bevorzugt ausgewählt aus der Gruppe umfassen Bor, Aluminium, Zink und Zinn ,und wenigstens ein Anion aus der Gruppe umfassend F⁻, Cl⁻, BF₄⁻, PF₆⁻, AsF₆⁻, SbF₆⁻, ClO₄⁻, IO₄⁻, und NO₃- Die Einsatzmenge des Katalysators beträgt bevorzugt zwischen 0,001 bis 0,5 Mol des Metallsalzes pro Äquivalent an einem Polybutadien gebundener Hydroxygruppe. Es können die Reaktionskomponenten und der Katalysator vorgelegt und dann zur Reaktion gebracht werden. Vorzugsweise wird der Metallsalzkatalysator mit dem Polybutadien mit Hydroxygruppen vorgelegt und danach wird die Monoexypoverbindung, bevorzugt Epihalohydrin, hinzugegeben.

Bevorzugt wird überschüssige Monoexypoverbindung nach Schritt b) destillativ entfernt, wobei das Lösungsmittel bevorzugt erst nach dieser Entfernung der überschüssigen Monoexypoverbindung hinzugegeben wird.

In Schritt c) erfolgt eine Dehydrohalogenierung durch Zugabe wenigstens eines Alkalimetallhydroxids als Base zur Bildung des Alkalimetallhalogenids zur Reaktionsmischung aus Schritt b). In einer bevorzugten Ausführungsform beträgt die Menge des zugegebenen Alkalimetallhydroxids zwischen 0,7 bis 1,4 Mol pro Äquivalent an einem Polybutadien gebundener Hydroxygruppe eingesetzt. Die Temperatur in Schritt c) sollte zwischen 0 und 80 °C liegen.

Das erfindungsgemäße Polybutadien mit Epoxygruppen kann erfindungsgemäß in einer Zusammensetzung umfassend das Polybutadien mit Epoxygruppen sowie wenigstens einen Härter, optional zusätzlich wenigstens ein Epoxydharz, verwendet werden.

In einer bevorzugten Ausführungsform wird unter dem Begriff "Epoxidharz", wie hierin verwendet, ein Prepolymer verstanden, das pro Molekül zwei oder mehr Epoxygruppen aufweist. Die Reaktion dieser Harze mit einer Reihe von Vernetzern, auch als Härter bezeichnet, führt zu vernetzten Polymeren. Diese Polymere können duroplastisch sein und können in den Bereichen z. B. Civil Engineering (Bauwesen), besonders in Industrieböden, Abdichtungen und Betonsanierungsprodukten, Composites (Faserverbundwerkstoffe), Vergussmassen, Lacke und Klebstoffen, Verwendung finden. Ein Überblick über die Harze und Härter sowie deren Verwendung im Bereich Civil Engineering einschließlich ihrer Eigenschaften findet sich in H. Schuhmann, "Handbuch Betonschutz durch Beschichtungen", Expert Verlag 1992, Seite 396 - 428. Der Einsatz der Harze und Härter für den Bereich Composites wird in P. K. Mallick, "Fiber-Reinforced Composites, Materials, Manufacturing, and Design", CRC Press, Seite 60 - 76 beschrieben. Als Epoxidharz kommen erfindungsgemäß alle Epoxidharze in Frage, die mit Aminen gehärtet werden können. Zu den Epoxidharzen zählen z. B. Polyepoxide auf Basis von Bisphenol A-diglycidylether, Bisphenol F-diglycidylether oder cycloaliphatische Typen wie z. B. 3,4-Epoxycyclohexyl-epoxyethan oder 3,4-Epoxycyclohexylmethyl-3,4-epoxy-cyclohexancarboxylat. Vorzugsweise wird in der erfindungsgemäßen Zusammensetzung wenigstens ein Epoxidharz eingesetzt, das aus der Gruppe auswählt ist, die Epoxidharze auf Basis von Bisphenol A-diglycidylether, Epoxidharze auf Basis von Bisphenol F-diglycidylether und cycloaliphatische Typen wie z. B. 3,4-Epoxycyclohexyl-epoxyethan oder 3,4-Epoxycyclohexylmethyl-3,4-epoxy-cyclohexan-carboxylat umfasst, wobei Bisphenol A basierte Epoxidharze und Bisphenol F basierte Epoxidharze besonders bevorzugt sind. Derartige Verbindungen sind im Handel erhältlich. Die härtbare Zusammensetzung kann erfindungsgemäß mehr als ein Epoxidharz aufweisen, d. h. mehr als eine Verbindung mit Epoxygruppen ist anwesend.

Als Härter kommen sämtliche im Stand der Technik für härtbare Zusammensetzungen umfassend wenigstens eine Epoxyverbindung beschriebene Härter in Frage, insbesondere aminhaltige Härter, die mindestens zwei oder mehr primäre und/oder sekundäre Aminogruppen aufweisen, z. B. Diethylentriamin, Triethylentetramin, Methylendianilin, Bis(aminocyclohexyl)methan, 3,3'-Dimethyl-4,4'-diaminodicyclohexyl-methan, Tricyclododecandiamin, Norbornandiamin, N Aminoethylpiperazin, Isophorondiamin, m-Phenylenbis(methylamin), 1,3- und/oder 1,4-Bis(aminomethyl)cyclohexan, Trimethylhexamethylendiamin, Polyoxyalkylenamine, Polyaminoamide, und Umsetzungsprodukte von Aminen mit Acrylnitril und Mannichbasen, weiterhin ein Polyamin ausgewählt aus der Gruppe enthaltend Isophorondiamin, Diethylentriamin, Trimethylhexamethylen-diamin, m-Phenylenbis(methylamin), 1,3-Bis(aminomethyl)-cyclohexan, Methylen-bis(4-aminocyclohexan), 3,3'-Dimethyl-4,4'-diaminodicyclohexyl-methan, N-Aminoethyl-piperazin, Polyoxyalkylenamine, Polyaminoamide, Umsetzungsprodukte von Aminen mit Acrylnitril und Mannichbasen.

In einer weiteren bevorzugten Ausführungsform wird als Härter eine Verbindung mit wenigstens einer Anhydridgruppe verwendet, bevorzugt ein Di- oder Polycarbonsäureanhydrid. Beispielhafte Verbindungen umfassen Trimellitsäureanhydrid-Addukte und Hexahydrophthalsäureanhydrid.

Neben dem Polybutadien mit Epoxygruppen, dem Härter, optional dem Epoxidharz kann die erfindungsgemäße Zusammensetzung weitere Verbindungen umfassen, insbesondere ein Lösungsmittel, z.B. Xylol oder iso-Propanol, wenigstens einen Reaktionsbeschleuniger, bevorzugt aus der Gruppe organischer Säuren oder tertiärer Amine, z.B. Salicylsäure, Aminoethylpiperazin, Tris-(N,N-dimethylaminomethyl)-phenol, weiterhin Pigmente, Füllstoffe und/oder Additive, einen Reaktivverdünner, der bevorzugt aus der Gruppe mono-, bi- oder polyfunktioneller, bei Raumtemperatur flüssiger Epoxidverbindungen ausgewählt ist, z. B. Butylglycidether, 1,6-Hexan- und 1,4-Butandiglycidether, Neopentyldiglycidether, Phenylglycidether, Glycidether der Versatic-Säure, C12-C14-Glycidether, C13-C15-Glycidether, p-tert-Butyl-Phenylglycidether, Neopently-glykoldiglycidether, Polybutylendiglycidether, Glycerintriglycidether, Pentaerythropoly-glycidether, Trimethylolpropantriglycidether und Kresylglycidether, schließlich ein Modifizierungsmittel wie Benzylalkohol, Cumaron-Harz oder reaktive Kautschuke.

Die vorliegende Erfindung wird weiterhin durch die folgenden Figuren und nicht beschränkenden Beispiele veranschaulicht, denen weitere Merkmale, Ausführungsformen, Aspekte und Vorteile der vorliegenden Erfindung entnommen werden können.

### Beispiele:

Die Beispiele 1 bis 3 beschreiben die Synthese erfindungsgemäß zur Erhöhung der Schlagzähigkeit verwendbarer Polybutadiene mit Epoxygruppen.

### Beispiel 1:

116,8 g (0,1 Mol OH-Äquivalent) Polyvest EP HT gelöst in 83,2 g Toluol werden in einem mit Thermometer, Rührer, Rückflußkühler, Stickstoffüberleitung und Tropftrichter versehenen Sulfierkolben zusammen mit 0,19 g (0,001 Mol) SnCl2 vorgelegt. Dazu werden bei Raumtemperatur 10,18 g (0,11 Mol) Epichlorhydrin unter Rühren gegeben. Das Reaktionsgemisch wird 5 Stunden auf 100 °C Innentemperatur erhitzt. Nachdem Abkühlen auf 50 °C werden innerhalb von 30 Minuten 1,6 g (0,02 Mol) 50 %ige wässrige NaOH-Lösung und 3,6 g (0,09 Mol) pulverisiertes NaOH portionsweise dazugegeben. Diese Mischung wird noch 1 Stunde bei 50 °C gerührt. Das Reaktionsgemisch wird filtriert. Die organische Phase wird über MgSO4 getrocknet, filtriert und vom Lösemittel im Vakuum abgetrennt. 112 g (91,5 % der Theorie) des nahezu farblosen Polybutadienglycidylethers mit einem Äquivalentgewicht von 1840 konnten isoliert werden. Das Produkt hat eine mit dem Rotationsviskosimeter ermittelte Viskosität von 14 Pa s bei 20 °C. Der ermittelte Tg-Wert ist - 78 °C. Die Mikrostruktur des eingesetzten Polybutadiens mit Hydroxygruppen bleibt erhalten (22 % 1,2-vinyl, 20 % 1,4-cis, 58 % 1,4-trans).

### Beispiel 2:

58,4 g (0,1 Mol OH-Äquivalent) Poly bd R-20LM gelöst in 41,6 g Toluol werden in einem mit Thermometer, Rührer, Rückflußkühler, Stickstoffüberleitung und Tropftrichter versehenen Sulfierkolben zusammen mit 0,19 g (0,001 Mol) SnCl2 vorgelegt. Dazu werden bei Raumtemperatur 10,18 g (0,11 Mol) Epichlorhydrin unter Rühren gegeben. Das Reaktionsgemisch wird 5 Stunden auf 100 °C Innentemperatur erhitzt. Nachdem Abkühlen auf 50 °C werden innerhalb von 30 Minuten 1,6 g (0,02 Mol) 50 %ige wässrige NaOH-Lösung und 3,6 g (0,09 Mol) pulverisiertes NaOH portionsweise dazugegeben. Diese Mischung wird noch 1 Stunde bei 50 °C gerührt. Das Reaktionsgemisch wird filtriert. Die organische Phase wird über MgSO4 getrocknet, erneut filtriert und vom Lösemittel im Vakuum abgetrennt. 56,3 g (87,9 % der Theorie) des nahezu farblosen Polybutadienglycidylethers mit einem Äquivalentgewicht von 1010 konnten isoliert werden. Das Produkt hat eine mit dem Rotationsviskosimeter ermittelte Viskosität von 4,2 Pa s bei 20 °C. Der ermittelte Tg-Wert ist -71 °C. Die Mikrostruktur des eingesetzten Polybutadiens mit Hydroxygruppen bleibt erhalten (22 % 1,2-vinyl, 20 % 1,4-cis, 58 % 1,4-trans)

### Beispiel 3

58,4 g (0,1 Mol OH-Äquivalent) Poly bd R-20LM gelöst in 41,6 g Toluol werden in einem mit Thermometer, Rührer, Rückflußkühler, Stickstoffüberleitung und Tropftrichter versehenen Sulfierkolben zusammen mit 0,19 g (0,001 Mol) SnCl2 vorgelegt. Dazu werden bei Raumtemperatur 10,18g (0,11 Mol) Epichlorhydrin unter Rühren gegeben. Das Reaktionsgemisch wird 5 Stunden auf 100 °C Innentemperatur erhitzt. Nachdem Abkühlen auf 50 °C werden innerhalb von 30 Minuten 1,6 g (0,02 Mol) 50 %ige wässrige NaOH-Lösung und 3,6 g (0,09 Mol) pulverisiertes NaOH portionsweise dazugegeben. Diese Mischung wird noch 1 Stunde bei 50 °C gerührt und mit 50 g Toluol versetzt. Durch azeotrope Destillation wird Wasser aus dem Reaktionsgemisch entfernt. Das Reaktionsgemisch wird über MgSO4 filtriert und vom Lösemittel im Vakuum befreit. 58,9 g (92,0 % der Theorie) des nahezu farblosen Polybutadienglycidylethers mit einem Äquivalentgewicht von 1005 konnten isoliert werden. Das Produkt hat eine mit dem Rotationsviskosimeter ermittelte Viskosität von 4 Pa s bei 20 °C. Der ermittelte Tg-Wert ist -71 °C. Die Mikrostruktur des eingesetzten Polybutadiens mit Hydroxygruppen bleibt erhalten (22 % 1,2-vinyl, 20 % 1,4-cis, 58 % 1,4-trans).

## Patentansprüche

1. Verwendung von Polybutadien mit Epoxygruppen zur Erhöhung der Schlagzähigkeit einer härtbaren Zusammensetzung umfassend wenigstens ein Epoxidharz und wenigstens einen Härter im ausgehärteten Zustand,
wobei das Polybutadien die aus 1,3-Butadien abgeleiteten Monomereinheiten 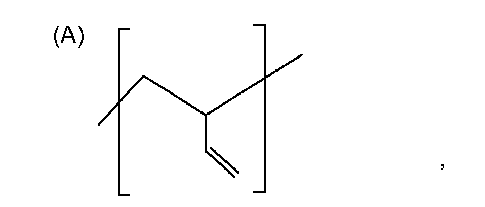 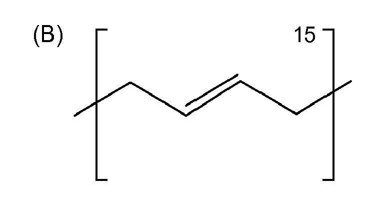 und 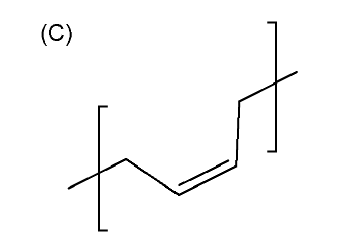 umfasst,
wobei der Anteil von A an der Gesamtheit der im Polybutadien enthaltenen aus 1,3-Butadien abgeleiteten Monomereinheiten 10 bis 60 Molprozent beträgt,
und wobei die Summe der Anteile von B und C an der Gesamtheit der im Polybutadien enthaltenen aus 1,3-Butadien abgeleiteten Monomereinheiten 40 bis 90 Molprozent beträgt.

2. Verwendung nach Anspruch 1, wobei der Anteil von A, B und C an der Gesamtheit der im Polybutadien enthaltenen aus 1,3-Butadien abgeleiteten Monomereinheiten jeweils und unabhängig voneinander wenigstens 10 % beträgt.

3. Verwendung nach einem der Ansprüche 1 bis 2, wobei der Anteil von A an der Gesamtheit der im Polybutadien enthaltenen aus 1,3-Butadien abgeleiteten Monomereinheiten 15 bis 30, der Anteil von B an der Gesamtheit der im Polybutadien enthaltenen aus 1,3-Butadien abgeleiteten Monomereinheiten 50 bis 70 und der Anteil von C an der Gesamtheit der im Polybutadien enthaltenen aus 1,3-Butadien abgeleiteten Monomereinheiten 15 bis 30 Molprozent beträgt.

4. Verwendung nach einem der Ansprüche 1 bis 3, wobei die Epoxygruppen die Formel (I) 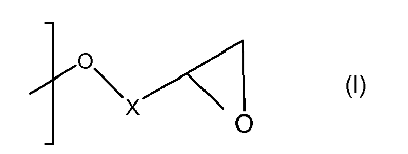 aufweisen und X eine lineare oder verzweigte Alkylengruppe darstellt, bevorzugt eine lineare Alkylengruppe der Formel -(CH₂)ₓ-, wobei x 1 bis 4, noch bevorzugter 1 ist.

5. Verwendung nach einem der Ansprüche 1 bis 4, wobei das Polybutadien 1,5 bis 3, bevorzugt 1,75 bis 2,5 Epoxygruppen aufweist.

6. Verwendung nach einem der Ansprüche 1 bis 5, wobei es sich bei der härtbaren Zusammensetzung um eine härtbare Zusammensetzung in Kleb-, Dicht- und Akustikmassen für Automobilanwendungen, Gießharzformulierungen für Elektroisolation, Dichtmassen für Baustoffe, zur Imprägnierung oder Verklebung von Metall, Glas- und Kohlefasergewebe handelt.

7. Verwendung nach einem der Ansprüche 1 bis 6, wobei das Epoxidharz aus der Gruppe umfassend Epoxidharze auf der Basis von Bisphenol A-diglycidylether, Bisphenol F-diglycidylether, kettenverlängerte Bisphenol-A-Harze mit Molmassen von 700 bis 5000, epoxidierte Novolake, Triglycidyl-p-aminophenol, Tetraglycidyl-methylendianilin und Hexahydrophthalsäure-diglycidylester und cycloaliphatische Typen ausgewählt ist.

8. Verwendung nach einem der Ansprüche 1 bis 7, wobei es sich bei dem wenigstens einen Härter handelt, der aus der Gruppe ausgewählt ist, die aminhaltigen Härter mit mindestens zwei oder mehr primäre und/oder sekundäre Aminogruppen, Di- und Polycarbonsäureanhydride umfasst.

9. Verwendung nach einem der Ansprüche 1 bis 7, wobei es sich bei der Härter aus der Gruppe ausgewählt ist, die substituierte Harnstoffe, Guanamine, Guanidine und Imidazole umfasst.

10. Verwendung nach Anspruch 9, wobei es sich bei dem Härter um Dicyandiamid handelt.

11. Verwendung nach Anspruch 8, wobei es sich bei dem wenigstens einen Härter um ein Polyamin handelt.

12. Verwendung nach einem der Ansprüche 1 bis 11, wobei die härtbare Zusammensetzung wenigstens eine weitere Verbindung aus der Gruppe umfassend Lösungsmittel, Reaktionsbeschleuniger, Pigmente, Füllstoffe, Additive, Reaktivverdünner und Modifizierungsmittel umfasst.
